# FASCICULE DE BREVET EUROPEEN

(11) **EP 2 982 602 B1**
(45) Date de publication et mention de la délivrance du brevet: **03.07.2019**
(21) Numéro de dépôt: 15179192.8
(22) Date de dépôt: 30.07.2015
(51) Int. Cl.: B64C 25/40

(54) **TRANSMISSION DE COUPLE À LA ROUE PAR LES BOULONS D'ASSEMBLAGE DE LA JANTE**
DREHMOMENTÜBERTRAGUNG AN DAS RAD ÜBER DIE BEFESTIGUNGSBOLZEN DER FELGE
TRANSMISSION OF TORQUE TO THE WHEEL VIA THE RIM ASSEMBLY BOLTS

(30) Priorité: 05.08.2014 FR 1457612
(43) Date de publication de la demande: 10.02.2016
(73) Titulaire: Safran Landing Systems, 78140 Vélizy-Villacoublay (FR)
(72) Inventeur: JABER, Sylvain, 78140 Velizy-Villacoublay (FR); CEKIC, Raffi, 78140 Velizy-Villacoublay (FR)
(74) Mandataire: Lavialle, Bruno François Stéphane

(56) Documents cités:
- EP-A2- 2 447 154
- DE-A1- 4 341 913
- GB-A- 1 213 862

## Description

L'invention est relative à un procédé pour entraîner en rotation une roue d'aéronef.

### ARRIERE-PLAN TECHNOLOGIQUE DE L'INVENTION

Il est de plus en plus envisagé d'équiper les aéronefs avec des organes d'entraînement en rotation des roues permettant le déplacement de l'aéronef alors que ses groupes motopropulseurs sont inactifs. En général, l'organe d'entraînement comprend un moteur électrique associé à un réducteur et équipé d'un pignon de sortie qui coopère avec un couronne d'entraînement solidaire de la jante de la roue. Cependant, la solidarisation de la couronne sur la jante nécessite de prévoir sur ces dernières des chapes spécifiques sur son pourtour, ce qui impose de produire des jantes spécifiques. Le plus souvent, avec les jantes de roues d'aéronef d'une certaine taille, les jantes comportent deux demi-jantes assemblées entre elles par une série de boulons.

Le document DE 43 41 913 A1 divulgue une roue motorisée d'aéronef ayant deux demi-jantes et un organe d'interfaçage avec l'entraînement assemblées par des boulons. Le document GB 1 213 862 A divulgue une autre roue motorisée d'aéronef avec un rotor du moteur monté coaxialement à la roue et relié seulement à une demi-jante par boulons.

### OBJET DE L'INVENTION

L'invention a pour objet un procédé d'entraînement en rotation d'une roue d'aéronef au moyen qui nécessite peu ou pas de modification des jantes existantes.

### PRESENTATION DE L'INVENTION

En vue de la réalisation de ce but, on propose un procédé d'entraînement en rotation d'une roue d'aéronef selon la revendication 1.

En particulier, la roue est équipée d'une jante comprenant deux demi-jantes assemblées par des boulons, dans lequel on commande un organe d'entraînement pour générer un couple d'entraînement de la roue. Le couple d'entraînement est transféré à la roue via les boulons d'assemblage de la jante.

Ainsi, le couple est transféré à la roue par les boulons d'assemblage de la jante, ce qui ne nécessite pas de modifier par ailleurs les demi-jantes. Il suffit d'adapter les boulons, ou de prévoir des interfaces de sortie de l'organe d'entraînement capables de s'adapter auxdits boulons pour entraîner la roue munie de sa jante habituelle.

Selon un mode de mise en oeuvre préféré, on dispose un anneau de couplage entre un rotor d'un moteur de l'organe d'entraînement et les boulons de la jante. L'anneau de couplage réalise à la fois la transmission du couple et l'amortissement des à-coups de transmission.

### PRESENTATION DES FIGURES

- La figure 1 est une vue en perspective éclatée du bas d'un atterrisseur d'aéronef équipé d'un organe d'entraînement en rotation couplé à la roue adjacente au moyen du procédé de l'invention ;
- La figure 2 est une vue en perspective de l'organe d'interfaçage s'étendant entre l'organe d'entraînement et la jante de la roue ;
- La figure 3 est une vue en coupe de l'atterrisseur de la figure 1 ;
- La figure 4 est une vue en perspective d'un organe d'entrainement muni d'un organe d'interfaçage pour la transmission du couple via les boulons d'assemblage de la jante de la roue, selon une variante de mise en oeuvre de l'invention ;
- La figure 5 est une vue en perspective d'une roue d'aéronef équipée de l'organe d'interfaçage de la figure 4.

### DESCRIPTION DETAILLEE D'UN MODE DE MISE EN ŒUVRE DE L'INVENTION

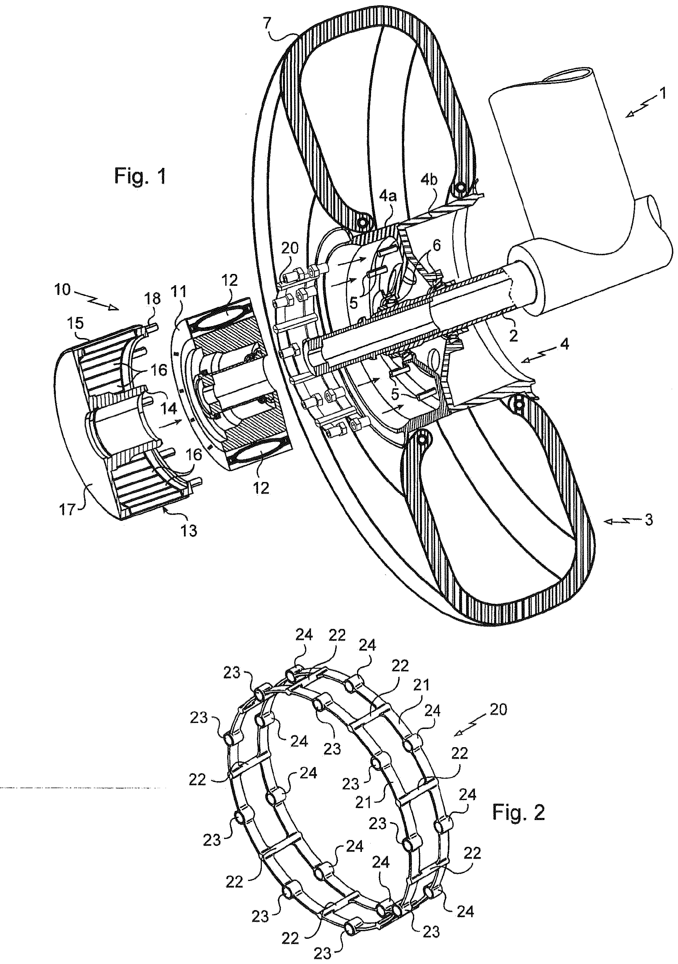

En référence à la figure 1, le procédé de l'invention est ici mis en oeuvre sur un atterrisseur 1 dont on aperçoit ici la partie inférieure équipée d'un essieu 2 sur lequel une roue 3 est montée pour tourner. La roue comporte une jante 4 formée de deux demi-jantes 4a, 4b assemblées par des boulons 5 comprenant chacun une vis et un écrou associé. La jante 4 est guidée en rotation sur l'essieu 2 au moyen de roulements 6, et porte un pneumatique 7. L'atterrisseur est équipé d'un organe d'entraînement en rotation de la roue 3 comportant essentiellement un moteur électrique 10 monté en extrémité de l'essieu 2. Le moteur 10 comporte un stator 11 qui est directement fixé à l'essieu 3. Le stator porte des bobines 12 à sa périphérie. Le moteur 10 comporte également un rotor 13 qui comporte un moyeu 14 monté tournant sur le stator, ici au moyen de roulements. Le rotor 13 comporte un tambour 15 qui s'étend autour du stator et qui porte des aimants permanents 16. Le tambour 15 est relié au moyeu 14 par un flasque 17 qui sert également de capot protecteur pour le moteur 10. La circulation d'un courant dans les bobines adapté à créer un champ magnétique tournant induit sur le tambour un couple mécanique entraînant le tambour en rotation. Quand le moteur 10 est en position sur l'essieu 3, l'axe de rotation du rotor 13 est confondu avec l'axe de rotation de la roue 3. Le tambour 15 porte une pluralité de tirants 18 qui s'étendent parallèlement à l'axe de rotation du rotor 13, sensiblement en regard des boulons 5. Le tambour forme ainsi l'organe de sortie de l'organe d'entraînement.

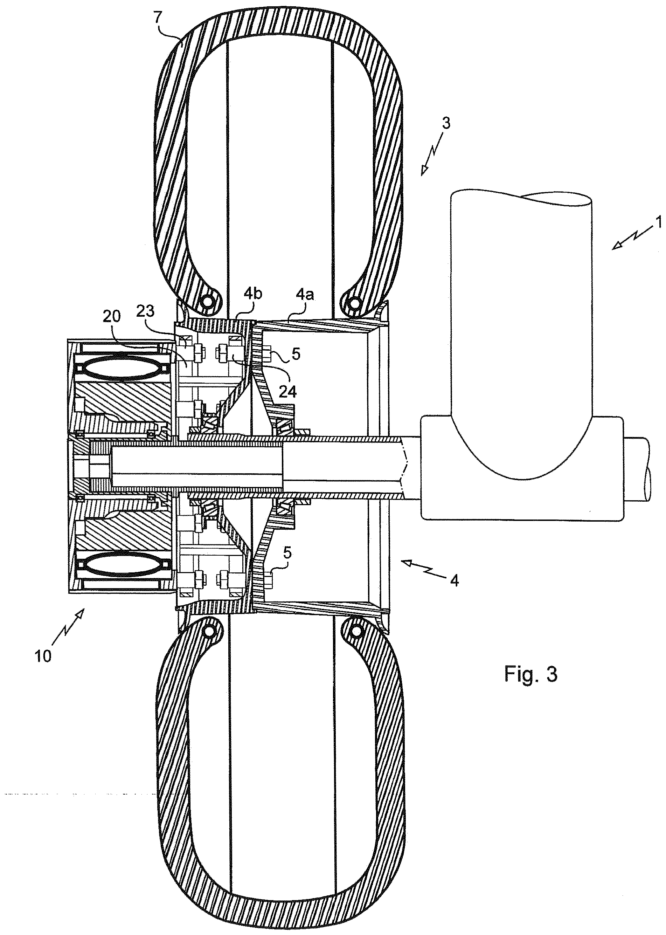

Un organe d'interfaçage 20 s'étend entre les tirants 18 et les boulons 5 pour relier en rotation le tambour 15 du rotor 13 et la roue 3. Comme cela est plus particulièrement visible à la figure 2, l'organe d'interfaçage 20 comporte deux anneaux 21 coaxiaux reliés par des traverses 22. Chaque anneau 21 porte une pluralité de douilles 23 et 24 adaptées à recevoir respectivement les extrémités des tirants 18 et des vis des boulons 5, comme cela est visible à la figure 3. Puis des écrous sont mis en place sur chaque tirant et chaque vis pour sécuriser l'organe d'interfaçage 20.

Ainsi, les boulons 5 enserrent les deux demi-jantes et les douilles 24 de l'organe d'interfaçage 20.

L'organe d'interfaçage 20 permet de transmettre le couple du rotor 13 vers la roue 3 pour entraîner celle-ci en rotation. On remarquera que sa structure est volontairement souple pour lui permettre d'absorber les à-coups de transmission et les mouvements relatifs entre la roue 3 et le rotor 13 dus notamment à la flexion de l'essieu et la déformation de la jante pendant le roulement de l'aéronef.

Le couple du moteur 10 est ainsi transmis à la roue 3 via les boulons 5 qui relient les demi-jantes 4a, 4b entre elles. Ainsi, il est possible d'utiliser des demi-jantes sans aucune modification, les demi-jantes étant largement dimensionnées pour recevoir le couple via les boulons d'assemblage. Il suffira de choisir des vis un peu plus longues que les vis habituelles ainsi que des écrous adaptés pour faciliter l'interfaçage avec l'organe d'entraînement.

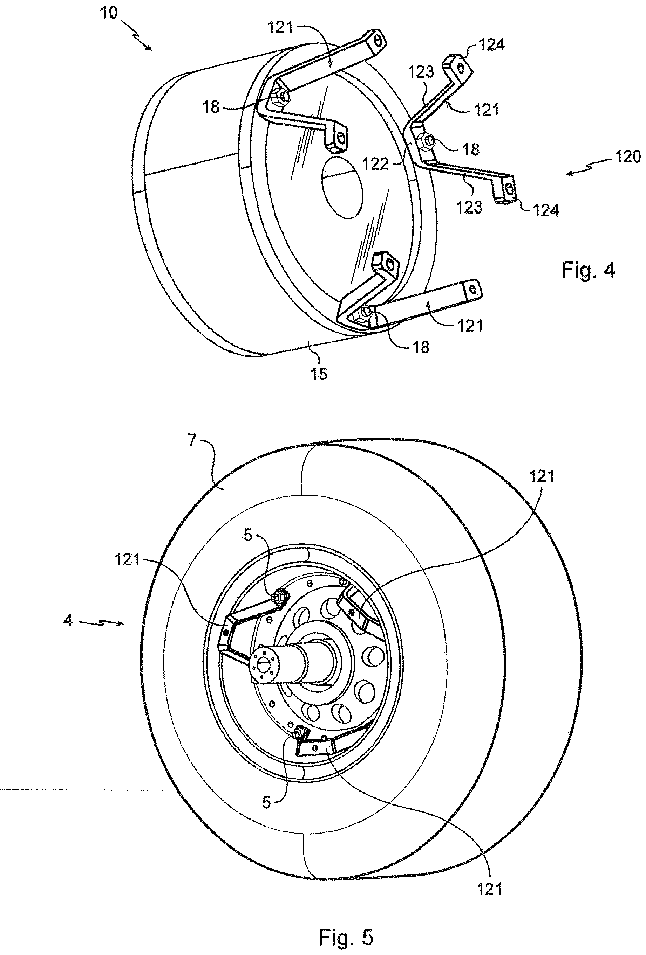

Selon une variante de l'invention illustrée aux figures 4 et 5, l'organe d'interfaçage 120 comporte ici trois étriers 121 comportant chacun un pont 122 reliant deux bras 123 terminés par des pattes 124. Les pattes 124 sont rapportées sur la jante 4 au moyen des boulons d'assemblage 5 et sont fixées au rotor 13 par les tirants 18. Le rotor est ainsi relié à la jante via l'organe d'interfaçage 120 qui transmet le couple du moteur via les boulons d'assemblage de la jante. On remarquera que les étriers peuvent être montés dans l'autre sens, les pattes étant fixées sur le rotor, tandis que le pont est fixé à la jante.

L'invention n'est pas limitée à ce qui vient d'être décrit, mais englobe toute variante entrant dans le cadre défini par les revendications. En particulier, bien que dans l'exemple illustré, l'organe d'entraînement soit placé vers l'extérieur de la jante de sorte que l'intérieur est libre pour recevoir des disques de freins, l'organe d'entraînement pourra être placé vers l'intérieur de la jante, tout en étant interfacé avec la roue par ses boulons d'assemblage.

Bien qu'ici le rotor du moteur de l'organe d'entraînement soit directement interfacé aux boulons de la jante, de sorte à être en prise directe avec la roue, on pourra bien sûr intercaler un réducteur, par exemple de type épicycloïdal, dont l'organe de sortie sera interfacé aux boulons de la jante.

Enfin, tout autre type d'interface pourra être envisagé entre la sortie de l'organe d'entraînement et les boulons d'assemblage de la jante.

## Revendications

1. Procédé d'entraînement en rotation d'une roue d'aéronef, la roue étant équipée d'une jante comprenant deux demi-jantes assemblées par des boulons (5), dans lequel on commande un organe d'entraînement pour générer un couple d'entraînement de la roue, le procédé comportant le transfert du couple d'entraînement à la roue via les boulons d'assemblage de la jante au moyen d'un organe d'entraînement qui comprend un moteur (10) ayant un organe de sortie (15) faisant partie d'un rotor du moteur (10), le rotor du moteur étant monté coaxialement à la roue, l'organe de sortie étant relié aux boulons d'assemblage (5) de la jante par un organe d'interfaçage (20 ; 120).

2. Procédé selon la revendication 1, dans lequel l'organe d'interfaçage (20) comporte deux anneaux coaxiaux (21) reliés entre eux par des traverses (22), chaque anneau comportant des douilles pour recevoir d'une part des extrémités des boulons d'assemblage de la jante (5) et d'autre part des extrémités de tirants solidaires de l'organe de sortie (15).

3. Procédé selon la revendication 2, dans lequel l'organe d'interfaçage (120) comporte une pluralité d'étriers (121) comportant deux bras (123) reliés par un pont (122) et terminés par des pattes (124), le pont de chaque étrier étant fixé à l'un de l'organe de sortie ou de la jante, les pattes étant fixées à l'autre de l'organe de sortie ou de la jante.

## Patentansprüche

1. Verfahren zum Drehantrieb eines Luftfahrzeugrades, wobei das Rad mit einer Feige ausgestattet ist, die zwei mittels Bolzen (5) zusammengefügte Halbfelgen umfasst, bei dem man ein Antriebselement steuert, um ein Antriebsdrehmoment für das Rad zu erzeugen, wobei das Verfahren das Übertragen des Antriebsmoments auf das Rad über die Montagebolzen der Felge mittels eines Antriebselementes umfasst, das einen Motor (10) umfasst, der ein Abtriebselement (15) hat, das zu einem Rotor des Motors (10) gehört, wobei der Rotor des Motors koaxial zum Rad gelagert ist, wobei das Abtriebselement mit den Montagebolzen (5) der Felge über ein Schnittstellenelement (20; 120) verbunden ist.

2. Verfahren nach Anspruch 1, bei dem das Schnittstellenelement (20) zwei koaxiale Ringe (21) umfasst, die miteinander über Querstreben (22) verbunden sind, wobei jeder Ring Hülsen umfasst, um einerseits Enden der Montagebolzen (5) der Felge und andererseits Enden von Zugstangen aufzunehmen, die fest mit dem Abtriebselement (15) verbunden sind.

3. Verfahren nach Anspruch 2, bei dem das Schnittstellenelement (120) eine Vielzahl von Bügeln (121) umfasst, die zwei Arme (123) enthalten, die über eine Brücke (122) verbunden sind und mit Laschen (124) abschließen, wobei die Brücke jedes Bügels an einem Element aus Abtriebselement oder Felge befestigt ist, wobei die Laschen an dem anderen Element aus Abtriebselement oder Felge befestigt sind.

## Claims

1. Method for rotationally driving an aircraft wheel, the wheel being equipped with a rim comprising two half-rims assembled by bolts (5), in which method a drive member for generating a torque for driving the wheel is controlled, **characterized in that** the method comprises the transfer of the drive torque to the wheel via the rim assembly bolts by means of a drive member which comprises a motor (10) having an output member (15) forming part of a rotor of the motor (10) mounted coaxially to the wheel, the output member being connected to the rim assembly bolts (5) by an interfacing member (20 ; 120).

2. Method according to Claim 1, in which the interfacing member (20) comprises two coaxial rings (21) connected to one another by crossmembers (22), each ring comprising sleeves for receiving, on the one hand, ends of the rim assembly bolts (5) and, on the other hand, ends of tie rods secured to the output member (15).

3. Method according to Claim 2, in which the interfacing member (120) comprises a plurality of stirrups (121) comprising two arms (123) connected by a bridge (122) and terminated by lugs (124), the bridge of each stirrup being fixed to the one of the output member or rim, the lugs being fixed to the other of the output member or rim.
